# EUROPEAN PATENT APPLICATION

(11) **EP 3 260 967 A1**
(43) Date of publication of application: **27.12.2017**
(21) Application number: 17176659.5
(22) Date of filing: 19.06.2017
(51) Int. Cl.: G06F 3/0481, G06F 17/24, G06F 17/27, G06F 3/0488, G06F 3/0484

(54) **METHOD AND APPARATUS FOR TEXT SELECTION**

(30) Priority: 23.06.2016 CN 201610466423
(71) Applicant: Beijing Xiaomi Mobile Software Co., Ltd., Beijing 100085 (CN)
(72) Inventor: WANG, Xi, Beijing 100085 (CN); XU, Shengqiang, Beijing 100085 (CN); XIE, Ran, Beijing 100085 (CN); YI, Haiyang, Beijing 100085 (CN)
(74) Representative: Underwood, Nicolas Patrick

(57) **Abstract**

A method and apparatus for text selection are disclosed in the invention, which belong to a field of text manipulation. The method includes: determining (101), in a text for selection, a first display position of a start selection point and a first display position of an end selection point, wherein a text between the start selection point and the end selection point is a target text including at least one character; partitioning (102) the text for selection into a number of text blocks based on semantic meaning; receiving (103) a dragging operation corresponding to the start selection point or the end selection point; and changing (104), according to the dragging operation, the first display position of the start selection point or the first display position of the end selection point to a second display position using a text block as unit for changing the position.

## Description

### FIELD

The present invention relates to the field of text manipulation, and more particularly, to a method and an apparatus for text selection.

### BACKGROUND

When a user wants to perform duplication, mark, move or other operations on a text area, the user usually should select the text area firstly.

In a terminal which may be operated via a touch screen, when a text goes into a mode for selection, two selection points occur respectively on the head of the text and the tail of the text. The user may select the text area by dragging the selection point on the head of the text and the selection point on the tail of the text with finger(s). Selection for the text area is not accurate enough, since the operation on the selection points with finger(s) is imprecise.

### SUMMARY

In view of the fact in the related arts, a method and an apparatus for text selection are provided in the present invention.

According to a first aspect of embodiments, the invention relates to a method for text selection. The method includes: determining, in a text for selection, a first display position of a start selection point and a first display position of an end selection point; wherein the text between the start selection point and the end selection point is a target text including at least one character; partitioning the text for selection into a number of text blocks based on semantic meaning; receiving a dragging operation corresponding to the start selection point or the end selection point; and changing, according to the dragging operation, the first display position of the start selection point or the first display position of the end selection point to a second display position using a text block as unit for changing the position.

In a particular embodiment, the text for selection is any text displayed by the terminal.

In a particular embodiment, a dragging operation corresponding to the start selection point or the end selection point is an operation which consists in dragging one of the start selection point or the end selection point.

In a particular embodiment, changing the first display position of the start selection point or the first display position of the end selection point to a second display position in using a text block as unit for changing the position corresponds to any one of :
- moving the first display position of the start point or the first display position of the end selection point backward or forward by a predetermined number of text blocks; or
- moving the first display position of the start point or the first display position of the end selection point to a delimiter position, wherein the delimiter position is a position spacing two text blocks closest to the end position of the dragging operation.

In a particular embodiment, partitioning the text for selection into a number of text blocks based on the semantic meaning includes: determining semantic granularity, which is one of a word, a sentence and a paragraph; and partitioning the text for selection into a number of text blocks conforming to the semantic granularity.

In a particular embodiment, changing, according to the dragging operation, the first display position of the start selection point or the first display position of the end selection point to the second display position using a text block as unit for changing the position includes: moving the first display position of the start selection point forward by certain text blocks to obtain the second display position, when the dragging operation is forward dragging of the start selection point; moving the first display position of the start selection point backward by certain text blocks to obtain the second display position, when the dragging operation is backward dragging of the start selection point; moving the first display position of the end selection point forward by certain text blocks to obtain the second display position, when the dragging operation is forward dragging of the end selection point; moving the first display position of the end selection point backward by certain text blocks to obtain the second display position, when the dragging operation is backward dragging of the end selection point; the forward dragging is at least one of leftward dragging laterally and upward dragging vertically, and the backward dragging is at least one of rightward dragging laterally and downward dragging vertically.

Alternatively, changing according to the dragging operation the first display position of the start selection point or the first display position of the end selection point into the second display position using a text block as unit for changing the position includes: obtaining the end position of the dragging operation; looking up a delimiter position closest to the end position; wherein the delimiter position is a position spacing two text blocks; and determining the delimiter position as the second display position of the start selection point or the second display position of the end selection point.

In a particular embodiment, the method further includes: adjusting, when at least one of the first display position of the start selection point and the first display position of the end selection point is located within a text block, the first display position of the start selection point and the first display position of the end selection point according to the text block, such that the first display position of the start selection point and the first display position of the end selection point are respectively located at a closest delimiter position; wherein the delimiter position is a position spacing two text blocks.

According to a second aspect of embodiments, the invention relates to an apparatus for text selection. The apparatus includes: a determination module configured to determine, in a text for selection, a first display position of a start selection point and a first display position of an end selection point, wherein a text between the start selection point and the end selection point is a target text including at least one character; a partition module configured to partition the text for selection into a number of text blocks based on semantic meaning; a reception module configured to receive a dragging operation corresponding to the start selection point or the end selection point; and an operation module configured to change, according to the dragging operation, the first display position of the start selection point or the first display position of the end selection point to a second display position using a text block as unit for changing the position.

In a particular embodiment, the partition module includes: a first determination sub-module configured to determine semantic granularity, which is one of a word, a sentence and a paragraph; and a partition sub-module configured to partition the text for selection into a number of text blocks conforming to the semantic granularity based on the semantic meaning.

In a particular embodiment, the operation module is configured to: move the first display position of the start selection point forward by certain text blocks to obtain the second display position, when the dragging operation is forward dragging of the start selection point; move the first display position of the start selection point backward by certain text blocks to obtain the second display position, when the dragging operation is backward dragging of the start selection point backward; move the first display position of the end selection point forward by certain text blocks to obtain the second display position, when the dragging operation is forward dragging of the end selection point; move the first display position of the end selection point backward by certain text blocks to obtain the second display position, when the dragging operation is backward dragging of the end selection point backward; the forward dragging is at least one of leftward dragging laterally and upward dragging vertically, and the backward dragging is at least one of rightward dragging laterally and downward dragging vertically.

In a particular embodiment, the operation module includes: an obtaining sub-module configured to obtain the end position of the dragging operation; a look-up sub-module configured to look up a delimiter position closest to the end position; wherein the delimiter position is a position spacing two text blocks; and a second determination sub-module configured to determine the delimiter position as the second display position of the start selection point or the second display position of the end selection point.

In a particular embodiment, the apparatus further includes: an adjustment module configured to adjust, when at least one of the first display position of the start selection point and the first display position of the end selection point is located within a text block, the first display position of the start selection point and the first display position of the end selection point according to the text block, such that the first display position of the start selection point and the first display position of the end selection point are respectively located at a closest delimiter position; the delimiter position is a position spacing two text blocks.

According to a third aspect of embodiments, the invention relates to an apparatus for text selection. The apparatus may include: a processor; and a memory for storing instructions executable by the processor; the processor is configured to: determine, in a text for selection, a first display position of a start selection point and a first display position of an end selection point; wherein a text between the start selection point and the end selection point is a target text including at least one character; partition the text for selection into a number of text blocks based on semantic meaning; receive a dragging operation corresponding to the start selection point or the end selection point; and change, according to the dragging operation, the first display position of the start selection point or the first display position of the end selection point to a second display position using a text block as unit for changing the position.

In a particular embodiment, the steps of the method for text selection mentioned above are determined by computer program instructions.

Consequently, the invention is also directed to a computer program for executing the steps of a method for text selection when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a hard disk.

Alternatively, the information medium can be an integrated circuit in which the program is incorporated, the circuit being adapted to execute the method in question or to be used in its execution.

Embodiments of the present invention may provide at least some of the following beneficial effects.

Embodiments of the invention solve a problem in related art that selection for a target text based only on an operation of a user is not accurate enough, since the operation of user is imprecise, by following operations: determining, in a text for selection, a first display position of a start selection point and a first display position of an end selection point, partitioning the text for selection into a number of text blocks based on semantic meaning, receiving a dragging operation corresponding to the start selection point or the end selection point, and changing, according to the dragging operation, the first display position of the start selection point or the first display position of the end selection point to a second display position using a text block as unit for changing the position; and achieve an effect that the content of the selected target text conforms the semantic meaning and is more accurate, through changing the selected target text using a text block partitioned based on the semantic meaning as unit.

It is to be understood that both the forgoing general description and the following detailed description are exemplary only, and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for text selection according to an exemplary embodiment.
Fig. 2 is a flow diagram illustrating a method for text selection according to another exemplary embodiment.
Fig. 3A is a schematic diagram illustrating an interface according to another exemplary embodiment.
Fig. 3B is a schematic diagram illustrating an interface according to another exemplary embodiment.
Fig. 4A is a schematic diagram illustrating an interface according to another exemplary embodiment.
Fig. 4B is a schematic diagram illustrating an interface according to another exemplary embodiment.
Fig. 4C is a schematic diagram illustrating an interface according to another exemplary embodiment.
Fig. 5A is a schematic diagram illustrating an interface according to another exemplary embodiment.
Fig. 5B is a schematic diagram illustrating an interface according to another exemplary embodiment.
Fig. 5C is a schematic diagram illustrating an interface according to another exemplary embodiment.
Fig. 6 is a flow diagram illustrating a method for text selection according to another exemplary embodiment.
Fig. 7 is a block diagram illustrating an apparatus for text selection according to an exemplary embodiment.
Fig. 8 is a block diagram illustrating an apparatus for text selection according to another exemplary embodiment.
Fig. 9 is a block diagram illustrating an apparatus for text selection according to another exemplary embodiment.

### DETAILED DESCRIPTION

Reference will now be made in detail to exemplary embodiments, examples of which are illustrated in the accompanying drawings. The following description refers to the accompanying drawings in which same reference numbers in different drawings represent same or similar elements unless otherwise described. The implementations set forth in the following description of exemplary embodiments do not represent all implementations consistent with the invention. Instead, they are merely examples of apparatus and methods consistent with aspects related to the invention as recited in the appended claims.

The one or more methods for text selection provided in various embodiments of the invention may be implemented by a terminal with a display screen. The terminal may be an electronic device, such as, a cellphone, a tablet, an e-book reader, a Moving Picture Experts Group Audio Layer III (MP3) player, a Moving Picture Experts Group Audio Layer IV (MP4) player, a portable computer, and a desktop computer.

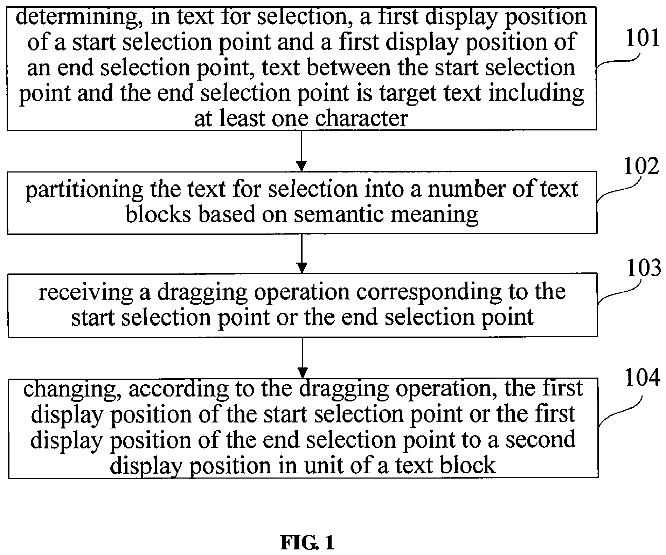

Fig. 1 is a flow diagram illustrating a method for text selection according to an exemplary embodiment. The method for text selection when performed by the above terminal is taken as an example in the embodiment, which may include the following steps.

In step 101, a first display position of a start selection point and a first display position of an end selection point are determined in a text for selection. The text between the start selection point and the end selection point is a target text including at least one character.

In step 102, the text for selection is partitioned into a number of text blocks based on semantic meaning.

In step 103, a dragging operation corresponding to the start selection point or the end selection point is received.

In step 104, the first display position of the start selection point or the first display position of the end selection point are changed, according to the dragging operation, to a second display position using a text block as unit for changing the position.

In conclusion, the method for text selection provided by the embodiment of the present invention solves a problem in related art that selection for target text based only on an operation of user is not accurate enough, since the operation of user is imprecise, by following operations: determining, in a text for selection, a first display position of a start selection point and a first display position of an end selection point, partitioning the text for selection into a number of text blocks based on semantic meaning, receiving a dragging operation corresponding to the start selection point or the end selection point, and changing, according to the dragging operation, the first display position of the start selection point or the first display position of the end selection point to a second display position using a text block as unit for changing the position; and achieves an effect that content of the selected target text conforms the semantic meaning and is more accurate, through changing the selected target text in using a text block partitioned based on the semantic meaning as unit.

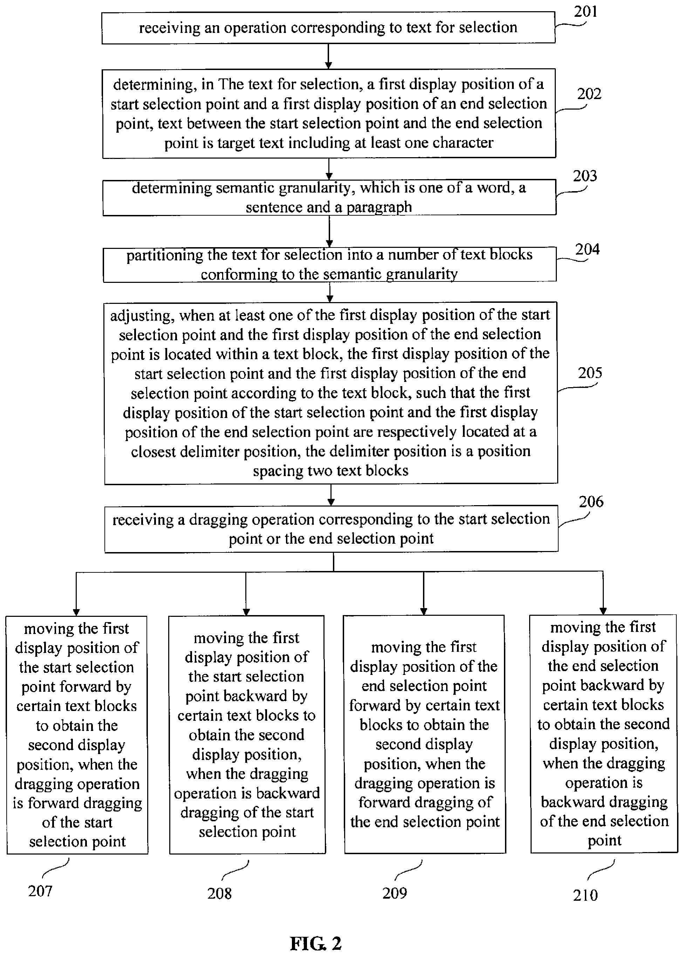

Fig. 2 is a flow diagram illustrating a method for text selection according to another exemplary embodiment. The method for text selection, when performed by the above terminal, is taken as an example in the embodiment, which may include the following steps.

In step 201, an operation corresponding to a text for selection is received. The text for selection goes into a mode for selection upon execution of the operation.

Optionally, the text for selection is any text displayed by the terminal.

Optionally, the operation is a click operation. The terminal gets the text for selection into the mode for selection upon detecting that an operation duration of the click operation corresponding to the text for selection is larger than a predetermined threshold or the click operation is a double-click operation. The predetermined threshold may be pre-set by the system or user-defined, which is not limited herein.

In step 202, a first display position of a start selection point and a first display position of an end selection point are determined in the text for selection. The text between the start selection point and the end selection point is a target text including at least one character.

Optionally, the start selection point and the end selection point occur in the text for selection when the text goes into the mode for selection, between which is the target text. The first display position of a start selection point and the first display position of an end selection point may be located within a predetermined area of a manipulation point of the received operation. A style of the start selection point and the end selection point, and the predetermined area are not limited in the embodiment.

Optionally, the first display position of the start selection point is ahead of the first display position of the end selection point, which means at least one of that the first display position of the start selection point is laterally on the left of the first display position of the end selection point and that the first display position of the start selection point is vertically above the first display position of the end selection point.

Optionally, a manipulation menu for manipulating the target text occurs when the text for selection goes into the mode for selection. The manipulation menu may include a setting option of semantic granularity, and an option of one or more manipulations on the selected target text. Content and form of the manipulation menu, and a location where the manipulation menu occurs are not limited in the embodiment.

Optionally, at least one of a background color, word color and text font of the target text is different from that of other text, leading to that a visual effect of the target text is different from that of other text, which is mot limited in the embodiment.

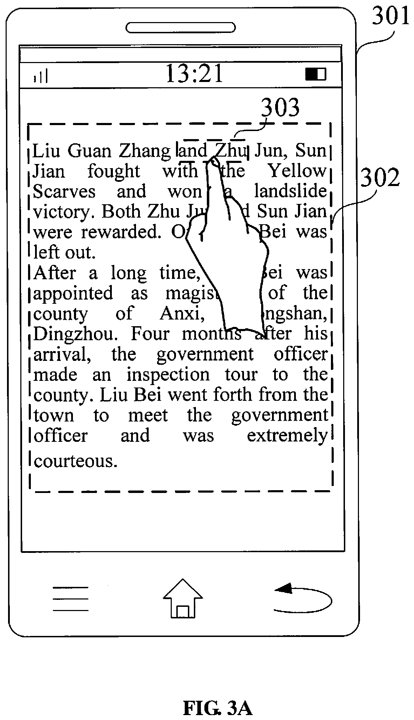

Taking that the terminal is a cellphone operated with a touch screen as an example, as shown in Fig. 3A, text for selection 302 is displayed on a terminal 301. The text for selection 302 may go into a mode for selection, when a user is pressing a manipulation point 303 in the text for selection 302 for a certain period.

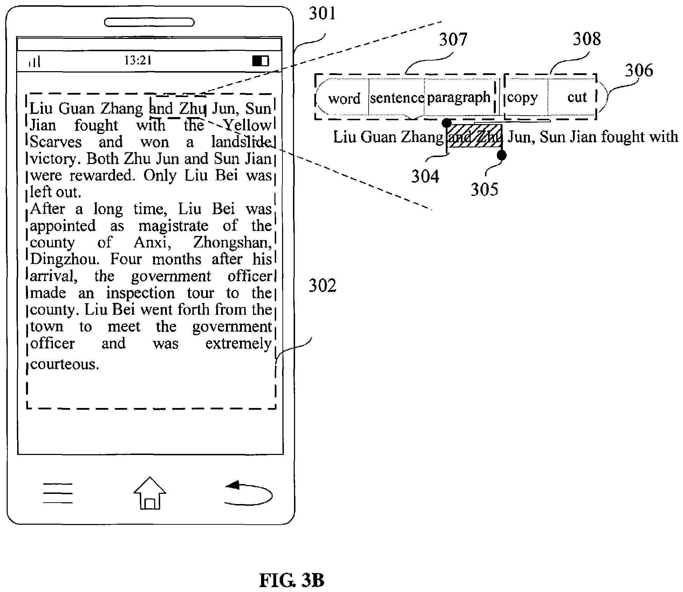

A start selection point 304, an end selection point 305 and a manipulation point 306 may occur, upon the text for selection 302 goes into the mode for selection, as shown in Fig. 3B. In Fig. 3B, a first display position of the start selection point 304 and a first display position of the end selection point 305 are located in a predetermined area around the manipulation point 303. The target text is between the start selection point 304 and the end selection point 305.

The manipulation menu 306 may include a setting option of semantic granularity 307, and an option of one or more manipulations on the target text 308. For example, the setting option of semantic granularity 307 may include a word, a sentence and a paragraph, and the option of one or more manipulations on the target text 308 may include copy and cut.

In step 203, semantic granularity is determined, which is one of a word, a sentence and a paragraph.

In step 204, the text for selection is partitioned based on the semantic meaning into a number of text blocks conforming to the semantic granularity.

Optionally, when the semantic granularity is a word, the terminal may match strings in the text for selection with entries in a dictionary. When a string in the text for selection is an entry in the dictionary, the terminal may determine the string as a text block. When a character in the text for selection cannot constitute an entry in the dictionary with one or more characters before or after this character, the terminal may determine this character as a text block. That is to say, the partitioned text blocks may be a word, character or punctuation, when the semantic granularity is a word.

Alternatively, when the semantic granularity is a sentence, the terminal may partition the text for selection into a number of text blocks, by detecting punctuation in the text for selection. Each of the text blocks is a sentence including a string and granularity after the string.

Alternatively, when the semantic granularity is a paragraph, the terminal may partition the text for selection into a number of text blocks, by detecting line breaks in the text for selection. Each of the text blocks is a paragraph.

Methods for partitioning the text are not limited in the embodiment.

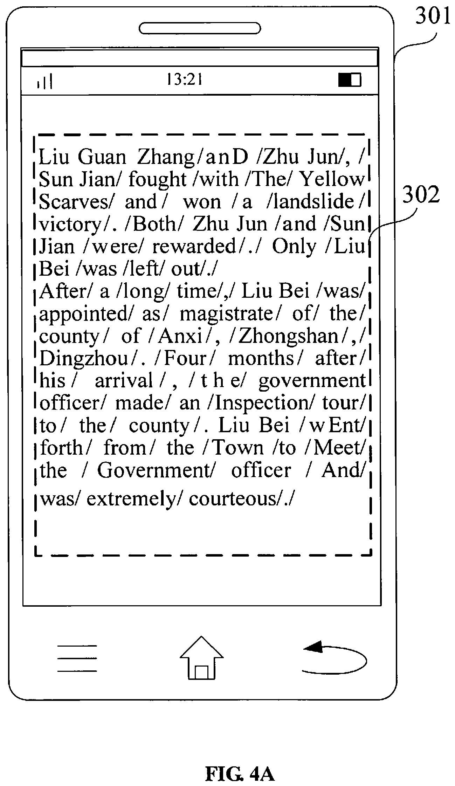

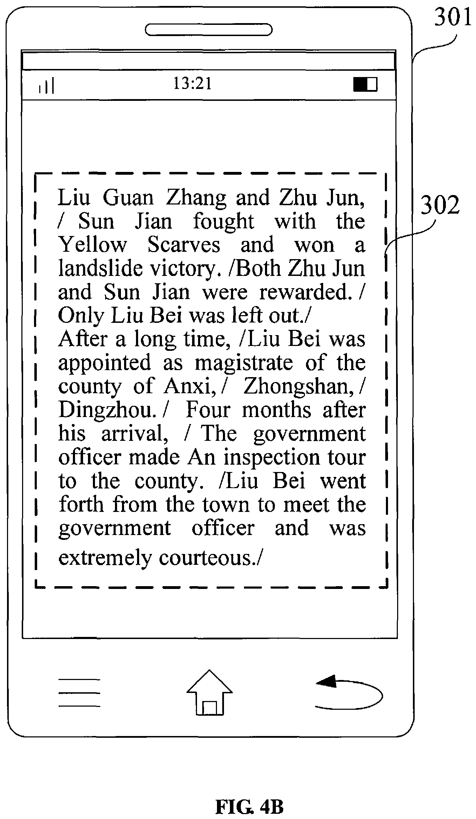

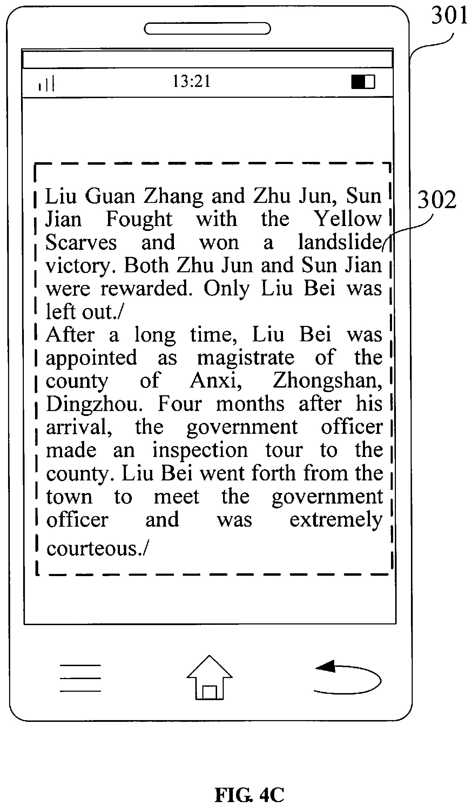

Taking the text for selection shown in Fig. 3A as an example, when the semantic granularity is a word, a partition result of the text for selection 302 is shown in Fig. 4A, in which "/" is used as a delimiter between text blocks; when the semantic granularity is a sentence, a partition result of the text for selection 302 is shown in Fig. 4B, in which "/" is used as a delimiter between text blocks; and when the semantic granularity is a paragraph, a partition result of the text for selection 302 is shown in Fig. 4C, in which "/" is used as a delimiter between text blocks.

In step 205, when at least one of the first display position of the start selection point and the first display position of the end selection point is located within a text block, the first display position of the start selection point and the first display position of the end selection point are adjusted according to the text block, such that the first display position of the start selection point and the first display position of the end selection point are respectively located at a closest delimiter position. The delimiter position is a position spacing two text blocks

Optionally, when the first display position of the start selection point or the first display position of the end selection point are located within a text block, and are of the same distance from the left delimiter position and the right delimiter position, the first display position of the start selection point or the first display position of the end selection point are randomly located at either of the left delimiter position or the right delimiter position.

Optionally, the first display position of the start selection point and the first display position of the end selection point are adjusted according to the text block, such that the first display position of the start selection point moves forward and is located at a delimiter position between the text block and the previous text block, and the first display position of the end selection point moves backward and is located at a delimiter position between the text block and the next text block. Forward move may be at least one of leftward move laterally and upward move vertically, and backward move may be at least one of rightward move laterally and downward move vertically.

It is to be noted that this step is optional. When the first display position of the start selection point and the first display position of the end selection point are respectively located at delimiter positions between text blocks, it is not needed to perform this step to adjust the first display position(s).

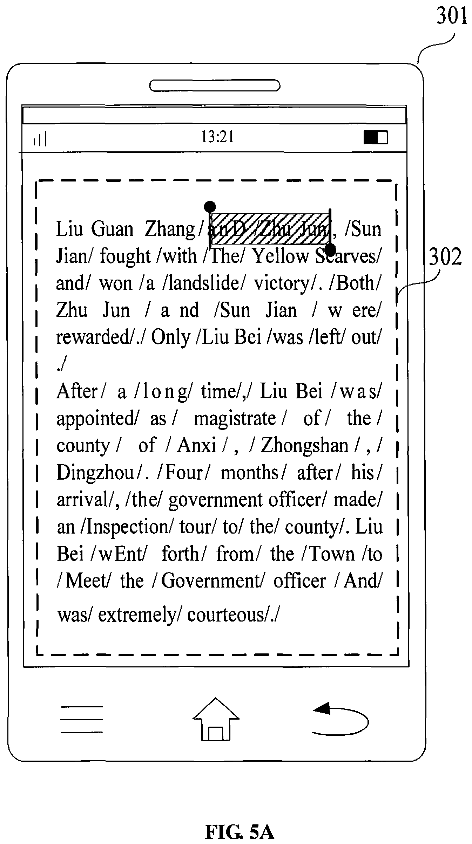

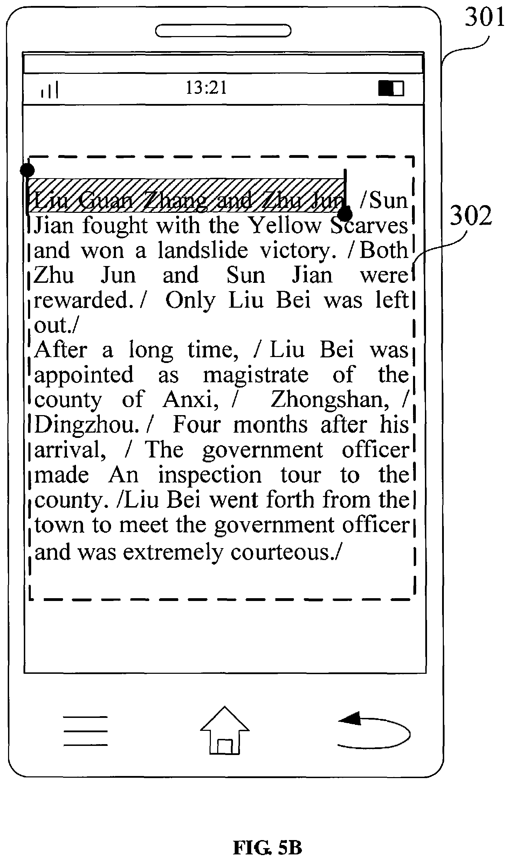

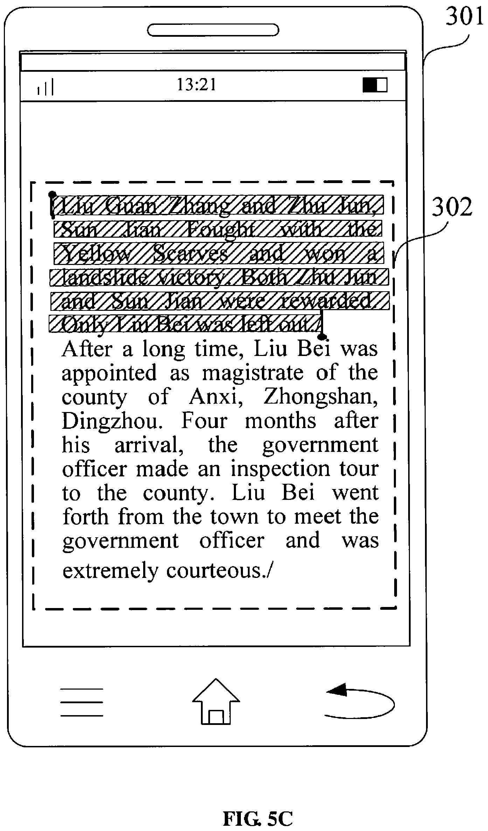

In the example shown in Fig. 3B, taking that the semantic granularity is a word as an example, the partition result of the text for selection 302 is shown in Fig. 4A, and the start selection point 304 and end selection point 305 shown in Fig. 3B are adjusted to those shown in Fig. 5A; when the semantic granularity is a sentence, the start selection point 304 and end selection point 305 shown in Fig. 3B are adjusted to those shown in Fig. 5B; and when the semantic granularity is a paragraph, the start selection point 304 and end selection point 305 shown in Fig. 3B are adjusted to those shown in Fig. 5C.

In step 206, a dragging operation corresponding to the start selection point or the end selection point is received.

In step 207, when the dragging operation is forward dragging of the start selection point, the first display position of the start selection point is moved forward by certain text blocks to obtain the second display position.

Optionally, the forward dragging is at least one of leftward dragging laterally and upward dragging vertically.

Optionally, upon the start selection point is dragged to a position before the first character of the text for selection, the forward move is stopped.

In step 208, when the dragging operation is backward dragging of the start selection point, the first display position of the start selection point is moved backward by certain text blocks to obtain the second display position.

Optionally, the backward dragging is at least one of rightward dragging laterally and downward dragging vertically.

Optionally, when the start selection point is dragged to a position after the end selection point, the start selection point turns into the end selection point, and the end selection point turns into the start selection point.

In step 209, when the dragging operation is forward dragging of the end selection point, the first display position of the end selection point is moved forward by certain text blocks to obtain the second display position.

Optionally, when the end selection point is dragged to a position before the start selection point, the end selection point turns into the start selection point, and the start selection point turns into the end selection point.

In step 210, when the dragging operation is backward dragging of the end selection point, the first display position of the end selection point is moved backward by certain text blocks to obtain the second display position.

Optionally, upon the end selection point is dragged to a position after the last character of the text for selection, the backward move is stopped.

Optionally, for each step of steps 207-210, when a dragging operation corresponding to the start selection point or the end selection point is received, the corresponding first display position moves forward or backward by a predetermined number of text blocks. The predetermined number may be pre-set by the system or user-defined.

It is to be noted that steps 207-210 are four parallel steps. When a dragging operation corresponding to the start selection point or the end selection point is received, one of the four steps is performed.

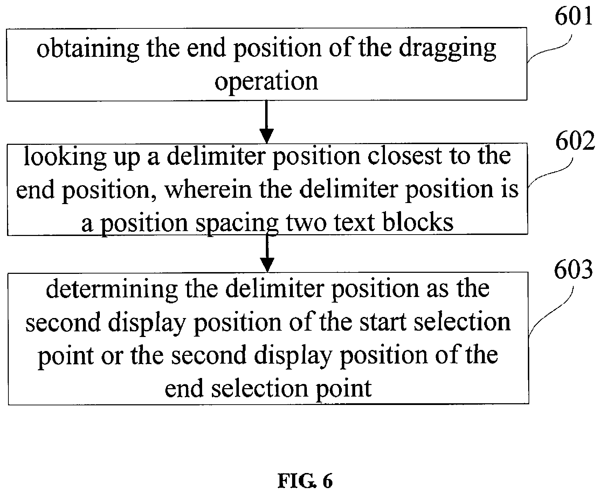

Optionally, each step of steps 207-210 may be implemented alternatively as steps shown in Fig. 6.

In step 601, the end position of the dragging operation is obtained.

In step 602, a delimiter position closest to the end position is looked up. The delimiter position is a position spacing two text blocks.

Optionally, when the end position is of the same distance from the left delimiter position and the right delimiter position, the end position is randomly located at either of the left delimiter position or the right delimiter position.

In step 603, the delimiter position is determined as the second display position of the start selection point or the second display position of the end selection point.

It is to be noted that a dragging operation may be continuously performed on the stat selection point or the end selection point (i.e., the above step 206 may be performed repeatedly), after the second display position of the start selection point or the second display position of the end selection point are determined.

In an exemplary example, taking that the text for selection shown in Fig. 3A as an example, when the semantic granularity is a word, a result of partitioning the text for selection 302 into text blocks and adjusting the first display position of the start selection point and the first display position of the end selection point is shown in Fig. 5A; a text block "," is incorporated into content of the target text, after a backward dragging is performed on the end selection point; another text block "Sun Jian" is further incorporated into the content of the target text, after another backward dragging is performed on the end selection point; and so on.

In conclusion, the method for text selection provided by embodiments of the present invention solves a problem in related art that selection for target text based only on an operation of user is not accurate enough, since the operation of user is imprecise, by following operations: determining, in a text for selection, a first display position of a start selection point and a first display position of an end selection point, partitioning the text for selection into a number of text blocks based on semantic meaning, receiving a dragging operation corresponding to the start selection point or the end selection point, and changing, according to the dragging operation, the first display position of the start selection point or the first display position of the end selection point to a second display position using a text block as unit for changing the position; and achieves an effect that content of the selected target text conforms the semantic meaning and is more accurate, through changing the selected target text using a text block partitioned based on the semantic meaning as unit.

Apparatus embodiments of the invention are described below, which may be used to perform method embodiments of the invention. Please refer to the method embodiments of the invention for details which are not disclosed in the apparatus embodiments of the invention.

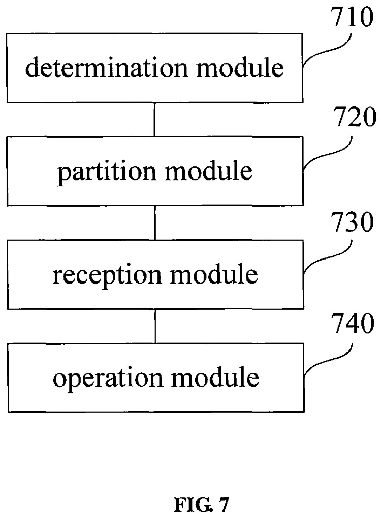

Fig. 7 is a block diagram illustrating an apparatus for text selection according to an exemplary embodiment. The apparatus may include following modules.

A determination module 710 is configured to determine, in a text for selection, a first display position of a start selection point and a first display position of an end selection point. The text between the start selection point and the end selection point is a target text including at least one character.

A partition module 720 is configured to partition the text for selection into a number of text blocks based on semantic meaning.

A reception module 730 is configured to receive a dragging operation corresponding to the start selection point or the end selection point.

An operation module 740 is configured to change, according to the dragging operation, the first display position of the start selection point or the first display position of the end selection point to a second display position using a text block as unit for changing the position.

In conclusion, the apparatus for text selection provided by the embodiment of the present invention solves a problem in related art that selection for target text based only on an operation of user is not accurate enough, since the operation of user is imprecise, by following operations: determining, in a text for selection, a first display position of a start selection point and a first display position of an end selection point, partitioning the text for selection into a number of text blocks based on semantic meaning, receiving a dragging operation corresponding to the start selection point or the end selection point, and changing, according to the dragging operation, the first display position of the start selection point or the first display position of the end selection point to a second display position using a text block as unit for changing the position; and achieves an effect that content of the selected target text conforms the semantic meaning and is more accurate, through changing the selected target text using a text block partitioned based on the semantic meaning as unit.

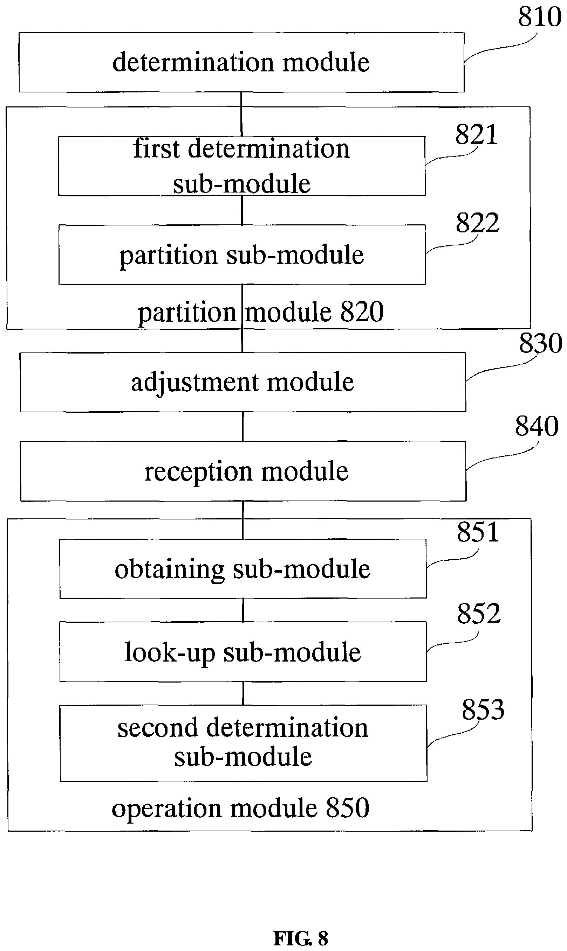

Fig. 8 is a block diagram illustrating an apparatus for text selection according to another exemplary embodiment. The apparatus may include following modules.

A determination module 810 is configured to determine, in the text for selection, a first display position of a start selection point and a first display position of an end selection point. Text between the start selection point and the end selection point is a target text including at least one character.

A partition module 820 is configured to partition the text for selection into a number of text blocks based on semantic meaning.

The partition module 820 may include a first determination sub-module 821 and a partition sub-module 822.

The first determination sub-module 821 is configured to determine semantic granularity, which is one of a word, a sentence and a paragraph.

The partition sub-module 822 is configured to partition the text for selection into a number of text blocks conforming to the semantic granularity based on the semantic meaning.

An adjustment module 830 is configured to adjust, when at least one of the first display position of the start selection point and the first display position of the end selection point is located within a text block, the first display position of the start selection point and the first display position of the end selection point according to the text block, such that the first display position of the start selection point and the first display position of the end selection point is respectively located at a closest delimiter position. The delimiter position is a position spacing two text blocks.

A reception module 840 is configured to receive a dragging operation corresponding to the start selection point or the end selection point.

An operation module 850 is configured to change, according to the dragging operation, the first display position of the start selection point or the first display position of the end selection point to a second display position using a text block as unit for changing the position.

The operation module 850 is configured to: move the first display position of the start selection point forward by certain text blocks to obtain the second display position, when the dragging operation is forward dragging of the start selection point; move the first display position of the start selection point backward by certain text blocks to obtain the second display position, when the dragging operation is backward dragging of the start selection point backward; move the first display position of the end selection point forward by certain text blocks to obtain the second display position, when the dragging operation is forward dragging of the end selection point; move the first display position of the end selection point backward by certain text blocks to obtain the second display position, when the dragging operation is backward dragging of the end selection point backward. The forward dragging may be at least one of leftward dragging laterally and upward dragging vertically, and the backward dragging may be at least one of rightward dragging laterally and downward dragging vertically.

Alternatively, the operation module 850 may include an obtaining sub-module 851, a look-up sub-module 852 and a second determination sub-module 853.

The obtaining sub-module 851 is configured to obtain the end position of the dragging operation.

The look-up sub-module 852 is configured to look up a delimiter position closest to the end position. The delimiter position is a position spacing two text blocks.

The second determination sub-module 853 is configured to determine the delimiter position as the second display position of the start selection point or the second display position of the end selection point.

In conclusion, the apparatus for text selection provided by embodiments of the present invention solves a problem in related art that selection for target text based only on an operation of user is not accurate enough, since the operation of user is imprecise, by following operations: determining, in a text for selection, a first display position of a start selection point and a first display position of an end selection point, partitioning the text for selection into a number of text blocks based on semantic meaning, receiving a dragging operation corresponding to the start selection point or the end selection point, and changing, according to the dragging operation, the first display position of the start selection point or the first display position of the end selection point to a second display position using a text block as unit for changing the position; and achieves an effect that content of the selected target text conforms the semantic meaning and is more accurate, through changing the selected target text using a text block partitioned based on the semantic meaning as unit.

Particular ways by which various modules of the apparatus of the above embodiments perform corresponding operations have been detailed in related method embodiments, which will not be illustrated in details herein.

An apparatus for text selection is provided by an exemplary embodiment of the invention, which can implement the method for text selection provided in the invention. The apparatus may include a processor and a memory for storing instructions executable by the processor. The processor is configured to determine, in a text for selection, a first display position of a start selection point and a first display position of an end selection point, wherein a text between the start selection point and the end selection point is a target text including at least one character; partition the text for selection into a number of text blocks based on semantic meaning; receive a dragging operation corresponding to the start selection point or the end selection point; and change, according to the dragging operation, the first display position of the start selection point or the first display position of the end selection point to a second display position using a text block as unit for changing the position.

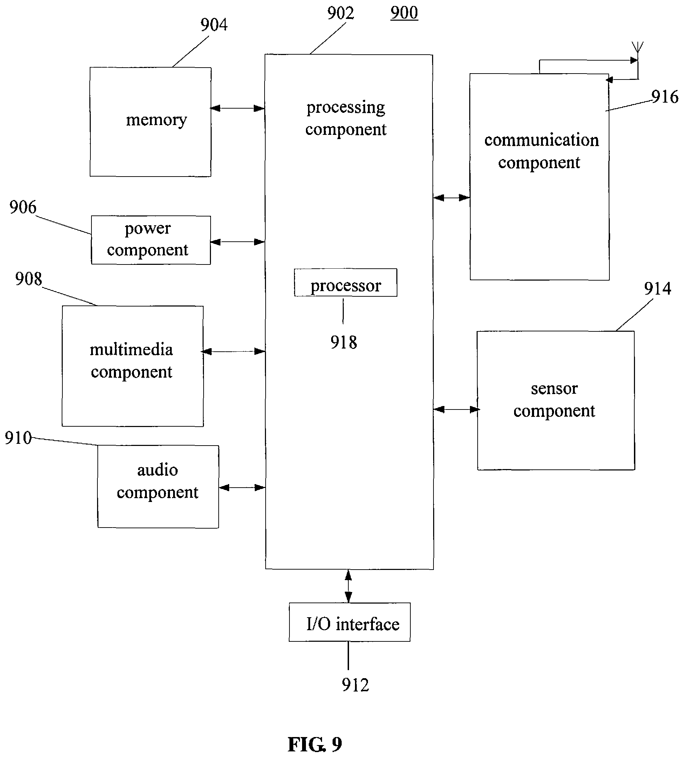

Fig. 9 is a block diagram illustrating an apparatus for text selection according to an exemplary embodiment. For example, the apparatus 900 may be a mobile phone, a computer, a digital broadcast terminal, a messaging device, a gaming console, a tablet, a medical device, an exercise equipment, a personal digital assistant, and the like.

Referring to Fig. 9, the apparatus 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the apparatus 900, such as the operations associated with display, telephone calls, data communications, camera operations, and recording operations. The processing component 902 may include one or more processors 918 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the apparatus 900. Examples of such data include instructions for any applications or methods operated on the apparatus 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the apparatus 900. The power component 906 may include a power management system, one or more power sources, and any other components associated with the generation, management, and distribution of power for the apparatus 900.

The multimedia component 908 includes a screen providing an output interface between the apparatus 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the apparatus 900 is in an operation mode, such as a photographing mode or a video mode. Each of the front camera and the rear camera may be a fixed optical lens system or have optical focusing and zooming capability.

The audio component 910 is configured to output and/or input audio signals. For example, the audio component 910 includes a microphone (MIC) configured to receive an external audio signal when the apparatus 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, the peripheral interface modules being, for example, a keyboard, a click wheel, buttons, and the like. The buttons may include, but are not limited to, a home button, a volume button, a starting button, and a locking button.

The sensor component 914 includes one or more sensors to provide status assessments of various aspects of the apparatus 900. For instance, the sensor component 914 may detect an open/closed status of the apparatus 900, relative positioning of components (e.g., the display and the keypad of the apparatus 900), a change in position of the apparatus 900 or a component of the apparatus 900, a presence or absence of user contact with the apparatus 900, an orientation or an acceleration/deceleration of the apparatus 900, and a change in temperature of the apparatus 900. The sensor component 914 may include a proximity sensor configured to detect the presence of a nearby object without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the apparatus 900 and other devices. The apparatus 900 can access a wireless network based on a communication standard, such as WiFi, 2G, or 3G, or a combination thereof. In an exemplary embodiment, the communication component 916 receives a broadcast signal or broadcast associated information from an external broadcast management system via a broadcast channel. In an exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 918 in the apparatus 900, for performing the above-described methods. For example, the non-transitory computer-readable storage medium may be a ROM, a random access memory (RAM), a CD-ROM, a magnetic tape, a floppy disc, an optical data storage device, and the like.

Other embodiments of the invention will be apparent to those skilled in the art from consideration of the specification and practice of the inventions herein. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the invention is not limited to the exact construction that has been described above and illustrated in the accompanying drawings, and that various modifications and changes can be made without departing from the scope thereof. It is intended that the scope of the invention only be limited by the appended claims.

## Claims

1. A method for text selection, which can be performed by a terminal, **characterized in that** it comprises:
determining (101, 202), in a text for selection, a first display position of a start selection point and a first display position of an end selection point, wherein a text between the start selection point and the end selection point is a target text including at least one character;
partitioning (102) the text for selection into a number of text blocks based on semantic meaning;
receiving (103, 206) a dragging operation corresponding to the start selection point or the end selection point; and
changing (104), according to the dragging operation, the first display position of the start selection point or the first display position of the end selection point to a second display position using a text block as unit for changing the position.

2. The method of claim 1, wherein partitioning (102) the text for selection into a number of text blocks based on the semantic meaning comprises:
determining (203) semantic granularity, which is one of a word, a sentence and a paragraph; and
partitioning (204) the text for selection into a number of text blocks conforming to the semantic granularity based on the semantic meaning.

3. The method of claims 1 or 2, wherein changing (104), according to the dragging operation, the first display position of the start selection point or the first display position of the end selection point to the second display position comprises:
moving (207) the first display position of the start selection point forward by certain text blocks to obtain the second display position, when the dragging operation is forward dragging of the start selection point;
moving (208) the first display position of the start selection point backward by certain text blocks to obtain the second display position, when the dragging operation is backward dragging of the start selection point;
moving (209) the first display position of the end selection point forward by certain text blocks to obtain the second display position, when the dragging operation is forward dragging of the end selection point;
moving (210) the first display position of the end selection point backward by certain text blocks to obtain the second display position, when the dragging operation is backward dragging of the end selection point;
wherein the forward dragging is at least one of leftward dragging laterally and upward dragging vertically, and the backward dragging is at least one of rightward dragging laterally and downward dragging vertically.

4. The method of claims 1 or 2, wherein changing (104), according to the dragging operation, the first display position of the start selection point or the first display position of the end selection point into the second display position comprises:
Obtaining (601) the end position of the dragging operation;
looking up (602) a delimiter position closest to the end position, wherein the delimiter position is a position spacing two text blocks; and
determining (603) the delimiter position as the second display position of the start selection point or the second display position of the end selection point.

5. The method of claims 1 or 2, further comprising:
adjusting (205), when at least one of the first display position of the start selection point and the first display position of the end selection point is located within a text block, the first display position of the start selection point and the first display position of the end selection point according to the text block, such that the first display position of the start selection point and the first display position of the end selection point are respectively located at a closest delimiter position, the delimiter position is a position spacing two text blocks.

6. An apparatus for text selection, **characterized in that** it comprises:
a determination module (710, 810) configured to determine, in a text for selection, a first display position of a start selection point and a first display position of an end selection point, wherein a text between the start selection point and the end selection point is a target text including at least one character;
a partition module (720, 820) configured to partition the text for selection into a number of text blocks based on semantic meaning;
a reception module (730, 840) configured to receive a dragging operation corresponding to the start selection point or the end selection point; and
an operation module (740, 850) configured to change, according to the dragging operation, the first display position of the start selection point or the first display position of the end selection point to a second display position using a text block as unit for changing the position.

7. The apparatus of claim 6, wherein the partition module (720, 820) comprises:
a first determination sub-module (821) configured to determine semantic granularity, which is one of a word, a sentence and a paragraph; and
a partition sub-module (822) configured to partition the text for selection into a number of text blocks conforming to the semantic granularity based on the semantic meaning.

8. The apparatus of claims 6 or 7, wherein the operation module (740, 850) is configured to:
move the first display position of the start selection point forward by certain text blocks to obtain the second display position, when the dragging operation is forward dragging of the start selection point;
move the first display position of the start selection point backward by certain text blocks to obtain the second display position, when the dragging operation is backward dragging of the start selection point backward;
move the first display position of the end selection point forward by certain text blocks to obtain the second display position, when the dragging operation is forward dragging of the end selection point;
move the first display position of the end selection point backward by certain text blocks to obtain the second display position, when the dragging operation is backward dragging of the end selection point backward;
wherein the forward dragging is at least one of leftward dragging laterally and upward dragging vertically, and the backward dragging is at least one of rightward dragging laterally and downward dragging vertically.

9. The apparatus of claims 6 or 7, wherein the operation module (740, 850) comprises:
an obtaining sub-module (851) configured to obtain the end position of the dragging operation;
a look-up sub-module (852) configured to look up a delimiter position closest to the end position, wherein the delimiter position is a position spacing two text blocks; and
a second determination sub-module (853) configured to determine the delimiter position as the second display position of the start selection point or the second display position of the end selection point.

10. The apparatus of claims 6 or 7, further comprising:
an adjustment module (830) configured to adjust, when at least one of the first display position of the start selection point and the first display position of the end selection point is located within a text block, the first display position of the start selection point and the first display position of the end selection point according to the text block, such that the first display position of the start selection point and the first display position of the end selection point are respectively located at a closest delimiter position, the delimiter position is a position spacing two text blocks.

11. An apparatus for text selection, **characterized in that** it comprises:
a processor (918); and
a memory (904) for storing instructions executable by the processor (918);
wherein the processor (918) is configured to perform a method for text selection according to any one of claims 1 to 5.

12. A computer program including instructions for executing the steps of a method for text selection according to any one of claims 1 to 5 when said program is executed by a computer.

13. A recording medium readable by a computer and having recorded thereon a computer program including instructions for executing the steps of a method for text selection according to any one of claims 1 to 5.
